# EUROPEAN PATENT APPLICATION

(11) **EP 1 104 659 A1**
(43) Date of publication of application: **06.06.2001**
(21) Application number: 00125586.8
(22) Date of filing: 22.11.2000
(51) Int. Cl.: A47C 1/025, B60N 2/22

(54) **Reclining apparatus**

(30) Priority: 25.11.1999 JP 33408999
(71) Applicant: Ikeda Bussan Co., Ltd., Ayase-shi, Kanagawa 252-1121 (JP)
(72) Inventor: Yoshida, Tomonori, c/o Ikeda Bussan Co., Ltd., Ayase-shi, Kanagawa 252-1121 (JP); Eguchi, Moriyuki, c/o Ikeda Bussan Co., Ltd., Ayase-shi, Kanagawa 252-1121 (JP)
(74) Representative: Grünecker, Kinkeldey, Stockmair & Schwanhäusser Anwaltssozietät

(57) **Abstract**

A seat reclining apparatus has a base member (1) adapted to be secured to a seat member, substantially rounded, formed with a pair of first and second guide walls (9a,9b), and having an external periphery; a rotary arm (2) rotatably supported on the base member (1), adapted to be secured to a seat back, having a substantially cylindrical recess (19) formed with an internal toothed portion (21a) and an internal cylindrical wall surface, the cylindrical recess (19) fitting over a part of the external periphery of the base member (1), and the rotary arm (2) further having an external periphery; an lock member (12) put between the base member (1) and the rotary arm (2), having an external toothed portion (13), and guided by the pair of the first and second guide walls of the base member; a rotatable cam (16) put between the base member (1) and the rotary arm (2), and moving the lock member (12) between a lock position in which the external toothed portion (13) of the lock member (12) meshes with the internal toothed portion (21a) of the rotary arm and an unlock position in which the lock member (22) is spaced apart from the internal toothed portion of the rotary arm (2); and a ring member (6) disposed around the external periphery of the rotary arm in such a manner as to engage with at least the part of the external periphery of the base member (1).

## Description

### BACKGROUND OF THE INVENTION

The present invention relates to a reclining apparatus for reclining a seat back of a seat relative to a seat member (or "seat cushion"). More specifically, the present invention relates to the reclining apparatus having a base member secured to the seat member, a rotary arm rotatably supported on the base member and secured to the seat back, a lock member put between the base member and the rotary arm, and having an external toothed portion formed at its end, and a rotatable cam for moving the lock member between a lock position in which the external toothed portion of the lock member meshes with an internal toothed portion of the rotary arm and an unlock position in which the external toothed portion of the lock member is spaced apart from the internal toothed portion of the rotary arm.

Each of Japanese Patent Unexamined Publications No. 9(1997)-028496 and No. 9(1997)-131237 is the one that was invented previously by the inventor (applicant) of the present invention, and discloses a reclining apparatus similar to that of the present invention. Japanese Patent Examined Publication No. 63(1988)-065327 discloses a backrest hinge apparatus capable of locking according to an adjusting position. Moreover, Japanese Patent Unexamined Publication No. 7(1995)-136032 discloses a construction in which a cam is movable only in sliding directions (upward and downward) of a pole, to thereby prevent a bad joining due to dimensional errors of the pole and the cam.

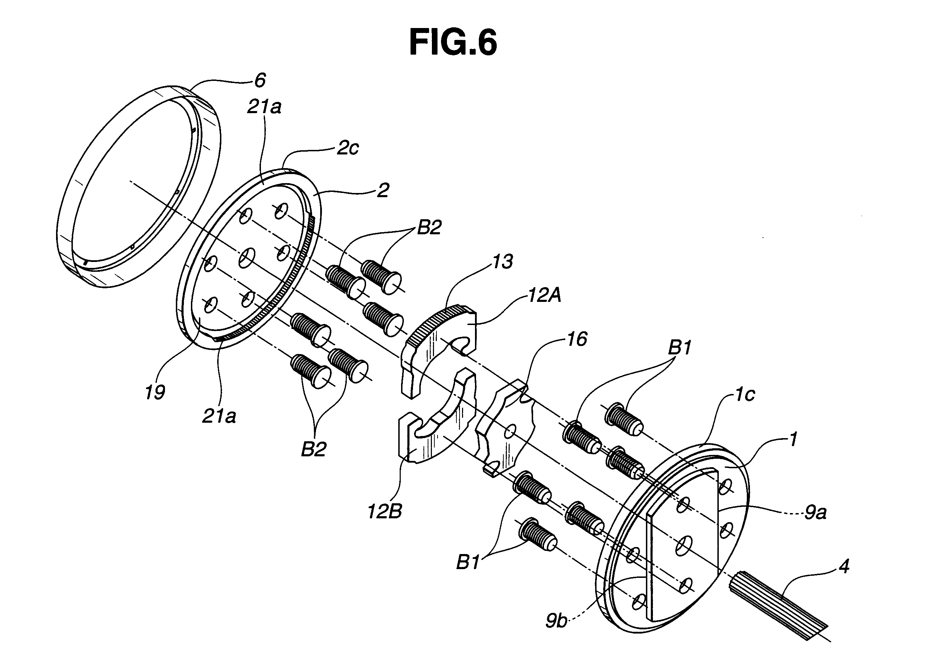

In addition to the four prior arts described above, there is disclosed a related art in Figs. 6 to 9. The related art has a base member 1 and a rotary arm 2 which are formed through a press molding process. The base member 1 is secured to the seat member with six fasteners B1. The rotary arm 2 is rotatably supported on the base member 1 and is secured to the seat back with six fasteners B2. The base member 1 is formed with a recess 10 having a pair of first and second guide walls 9a and 9b. On the other hand, as is best seen in Fig. 6, the rotary arm 2 is formed with a cylindrical recess 19.

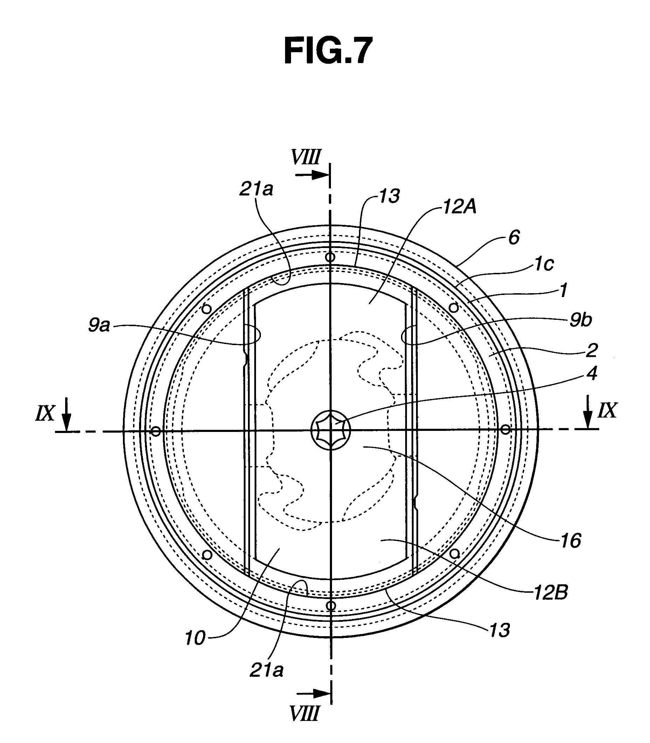

A pair of first and second lock members 12A and 12B are put between the recess 10 of the base member 1 and the cylindrical recess 19 of the rotary arm 2. The first and second lock members 12A and 12B are disposed in the recess 10 of the base member 1, and are guided by the pair of the first and second guide walls 9a and 9b of the base member 1 in such a manner as to freely move in upward and downward directions in Figs. 6 and 7. Each of the first and second lock members 12A and 12B has, at an end thereof, an external toothed portion 13. The external toothed portion 13 engages with an internal toothed portion 21a which is formed in the rotary arm 2.

There is provided a rotatable cam 16 between the first lock member 12A and the second lock member 12B. The rotatable cam 16 is allowed to move between a lock position and an unlock position. In the lock position, the external toothed portion 13 of each of the first and second lock members 12A and 12B meshes with one of the internal toothed portions 21a of the rotary arm 2. On the other hand, in the unlock position, the external toothed portion 13 of each of the first and second lock members 12A and 12B is spaced apart from one of the internal toothed portions 21a of the rotary arm 2. The rotatable cam 16 is connected with the center shaft 4 which is a rotational axis of an operation lever (not shown).

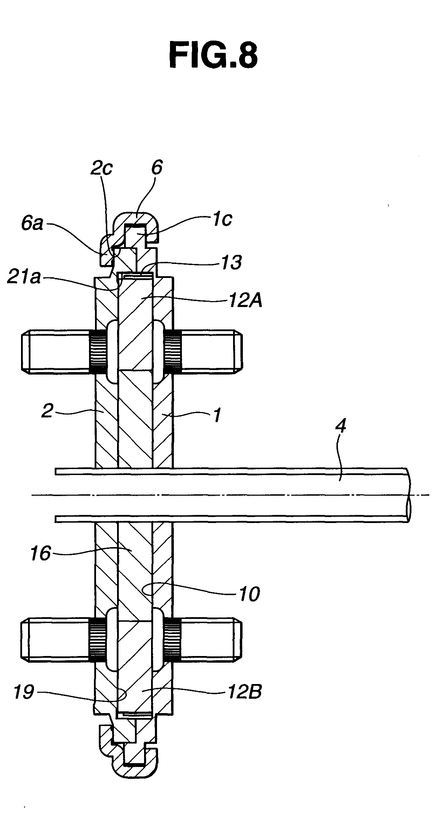

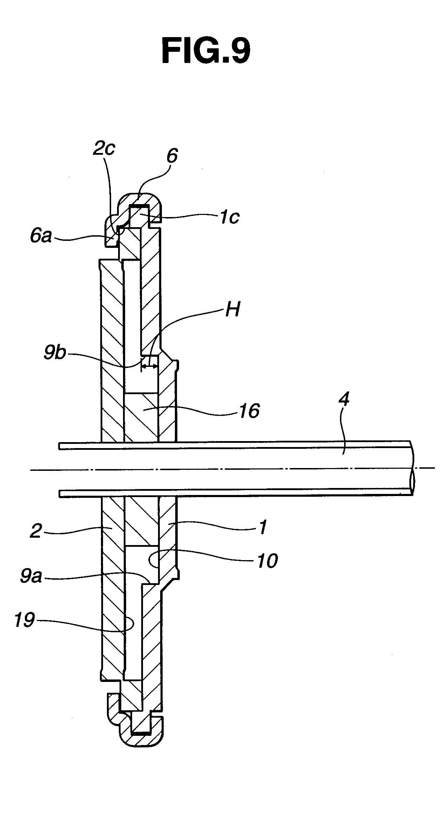

There is provided a ring member 6 around an external periphery of the base member 1. The ring member 6 engages with an external periphery 2c of the rotary arm 2. As is seen in Figs. 8 and 9, the ring member 6 is secured to the external periphery of the base member 1 through a caulking process. The ring member 6 has an inward flange 6a that engages with the external periphery 2c of the rotary arm 2, to thereby prevent the rotary arm 2 from being spaced apart from the base member 1 in a sideward direction in Figs. 8 and 9.

However, the reclining apparatus shown in Figs. 6 to 9 has its rotary function on a sliding wall surface of each of the base member 1 and the external periphery 2c of the rotary arm 2. In other words, the external periphery 2c of the rotary arm 2 rotates relative to a flange 1c of the base member 1. The flange 1c abuts on the external periphery 2c. Therefore, the rotary function is disposed between the external periphery 2c and the flange 1c. As a result, the base member 1 becomes larger in longitudinal length than the external periphery 2c by a length equivalent to two of the flanges 1c. With this, the reclining apparatus becomes large in longitudinal length.

Moreover, as is seen in Fig. 9, a gap H is secured for the first and second lock members 12A and 12B to slidably abut on the first and second guide walls 9a and 9b of the recess 10 of the base member 1. This thickens the first and second lock members 12A and 12B as well as the rotatable cam 16. As a result, the total thickness becomes large, that is to say, the base member 1 plus the rotary arm 2 plus the rotatable cam 16 (the first and second lock members 12A and 12B).

### SUMMARY OF THE INVENTION

It is, therefore, an object of the present invention to provide a reclining apparatus having a lock mechanism composed of small and light-weight component parts. It is the other object of the present invention to thin lock members, improve productivity of the lock members, strengthen locking strength, improve layout, improve passenger comfort, and save cost.

There is provided a seat reclining apparatus, according to the present invention. This seat reclining apparatus comprises: a base member adapted to be secured to a seat member, substantially rounded, formed with a pair of first and second guide walls, and having an external periphery; a rotary arm rotatably supported on the base member, adapted to be secured to a seat back, having a substantially cylindrical recess formed with an internal toothed portion and an internal cylindrical wall surface, the cylindrical recess fitting over a part of the external periphery of the base member, and the rotary arm further having an external periphery; an lock member put between the base member and the rotary arm, having an external toothed portion, and guided by the pair of the first and second guide walls of the base member; a rotatable cam put between the base member and the rotary arm, and moving the lock member between a lock position in which the external toothed portion of the lock member meshes with the internal toothed portion of the rotary arm and an unlock position in which the lock member is spaced apart from the internal toothed portion of the rotary arm; and a ring member disposed around the external periphery of the rotary arm in such a manner as to engage with at least the part of the external periphery of the base member.

### BRIEF DESCRIPTION OF THE DRAWINGS

Fig. 1 is an exploded perspective view of a reclining apparatus, according to a first preferred embodiment of the present invention;
Figs. 2 is a front view of the reclining apparatus, according to the first preferred embodiment of the present invention;
Fig. 3 is a cross section of the reclining apparatus taken along lines III-III in Fig. 2, according to the first preferred embodiment of the present invention;
Fig. 4 is a cross section of the reclining apparatus taken along lines IV-IV in Fig. 2, according to the first preferred embodiment of the present invention;
Fig. 5 is an exploded perspective view of a reclining apparatus, according to a second preferred embodiment of the present invention;
Fig. 6 is an exploded perspective view of a reclining apparatus, according to a related art;
Fig. 7 is a front view of the reclining apparatus, according to the related art;
Fig. 8 is a cross section of the reclining apparatus taken along lines VIII-VIII in Fig. 7, according to the related art; and
Fig. 9 is a cross section of the reclining apparatus taken along lines IX-IX in Fig. 7, according to the related art.

### DETAILED DESCRIPTION OF THE PREFERRED EMBODIMENT

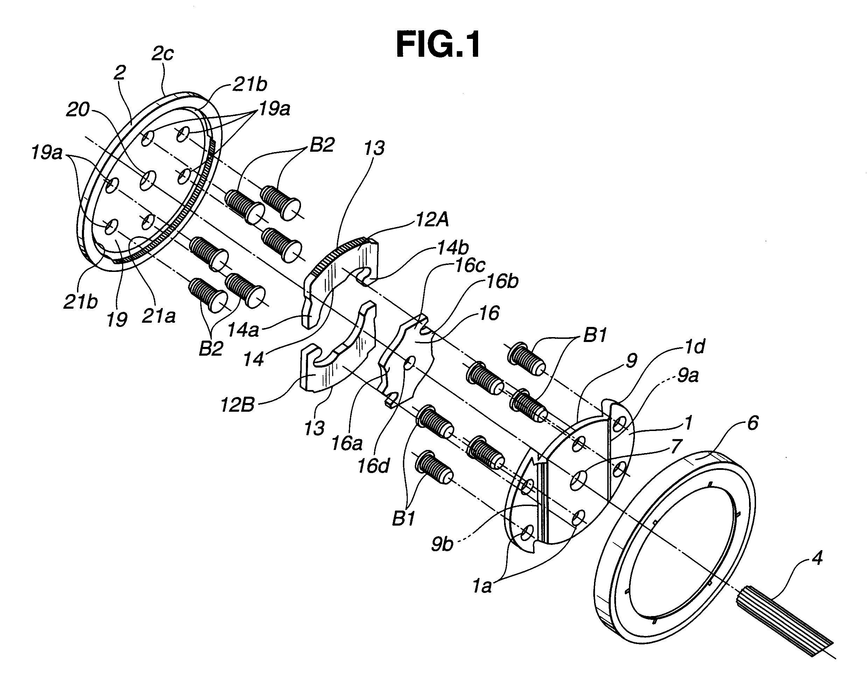

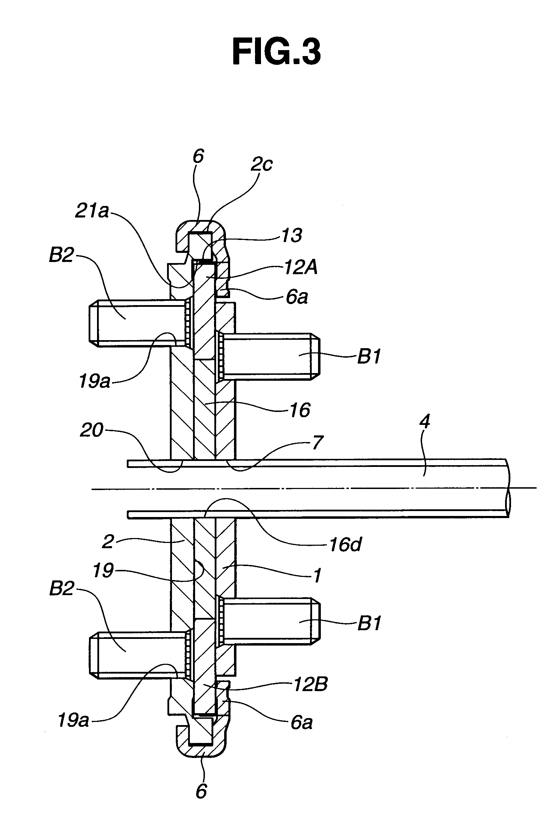

As is seen in Figs. 1 through 4, there is provided a reclining apparatus, according to a first preferred embodiment of the present invention. Members corresponding to those of the prior arts described above are denoted by the same numerals or symbols.

The reclining apparatus has a pair of base members 1 and a pair of rotary arms 2. Each of the base members 1 is secured to one of right and left sides of a seat member (or "seat cushion," not shown). Each of the rotary arms 2 is secured to one of right and left sides of a seat back (not shown). A center shaft 4 is a rotational axis, and is secured to an operation lever (not shown). Each of the rotary arms 2 is supported by the center shaft 4 in such a manner as to rotate freely around the center shaft 4. According to the first preferred embodiment, two reclining apparatuses are provided, each on one of right and left sides of a seat. However, only one reclining apparatus can be provided on one of the right and left sides of the seat.

As can be easily presumed from Fig. 1, the base member 1 has a substantially circular front view. In a center of the base member 1, there is provided a first center shaft opening 7 for inserting therein the center shaft 4. Around the center of the base member 1, there is provided a guide 9 extending in upward and downward directions. The guide 9 is formed through a forging process, a pressing process and the like. The guide 9 has a pair of first and second guide walls 9a and 9b which are disposed, respectively, on right and left sides of the base member 1. The first and second guide walls 9a and 9b extend in upward and downward directions in the base member 1. Moreover, the base member 1 has six fastener holes 1a each for inserting therein a fastener B1. The six fasteners B1 secure the base member 1 to the seat member.

The rotary arm 2 is rotatably supported on the base member 1. As is seen in Fig. 1, the rotary arm 2 has a cylindrical recess 19 which is formed with upper and lower internal toothed portions 21a. In a center of the cylindrical recess 19, there is provided a second center shaft opening 20 for inserting therein the center shaft 4. Moreover, there are provided six fastener holes 19a each for inserting therein a fastener B2. The six fasteners B2 secure the rotary arm 2 to the seat back. The rotary arm 2 according to the first preferred embodiment has the construction same as that disclosed in the related art shown in Figs. 6 to 9.

As is seen in Fig. 1, a pair of first and second lock members 12A and 12B are put between the base member 1 and the rotary arm 2. The first and second lock members 12A and 12B are guided freely in upward and downward directions relative to the first and second guide walls 9a and 9b of the base member 1. Each of the first and second lock members 12A and 12B has an external toothed portion 13. The external toothed portions 13 of the first and second lock members 12A and 12B engage, respectively, with the upper and lower internal toothed portions 21a on an internal periphery of the cylindrical recess 19 of the rotary arm 2. There are provided two internal cylindrical wall surfaces 21b on the internal periphery of the cylindrical recess 19, each of which is disposed between the adjacent two internal toothed portions 21a. When being disengaged from one of the internal toothed portions 21a, each of the external toothed portions 13 is positioned at one of the internal cylindrical wall surfaces 21b. The internal cylindrical wall surfaces 21b of the cylindrical recess 19 and an external periphery 1d of the base 1 constitute a rotary function of the reclining apparatus. In other words, the internal cylindrical wall surfaces 21b rotate relative to the external periphery 1d.

As is seen in Figs. 1 to 2, there is provided a rotatable cam 16 between the first lock member 12A (upper) and the second lock member 12B (lower). The rotatable cam 16 is allowed to rotatably move between a lock position and an unlock position. In the lock position, the external toothed portion 13 of each of the first and second lock members 12A and 12B meshes with one of the internal toothed portions 21a of the rotary arm 2. On the other hand, in the unlock position, the external toothed portion 13 of each of the first and second lock members 12A and 12B is spaced apart from one of the internal toothed portions 21a of the rotary arm 2. The rotatable cam 16 is connected with the center shaft 4 which is a rotational axis of the operation lever (not shown).

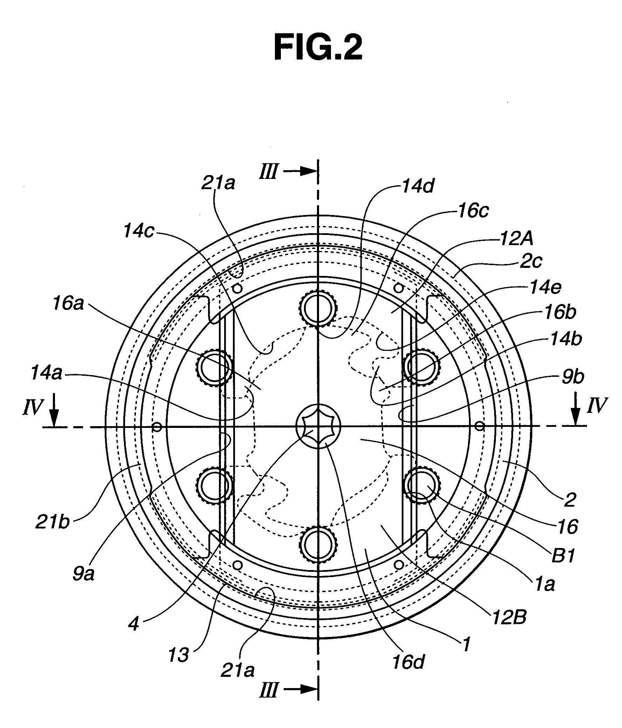

As is seen in Figs. 1 to 2, each of the first and second lock members 12A and 12B has a cam wall 14 on its internal periphery. The cam wall 14 is formed with first and second engaging walls 14a and 14b. The cam wall 14 is further formed with a curved wall 14c, a cam locking wall 14d, and a cam unlocking wall 14e. The curved wall 14c outwardly curves from the first engaging wall 14a in a clockwise direction in Fig. 2. The cam locking wall 14d is disposed at a rightward end of the curved wall 14c in Fig. 2, and is formed into a substantially circular arc. Moreover, the cam locking wall 14d has a radius of curvature around a center of the center shaft 4. The radius of the cam locking wall 14d is greater than that of each of the first and second engaging walls 14a and 14b. The cam unlocking wall 14e extends from the cam locking wall 14d in the clockwise direction in Fig. 2 to reach the second engaging wall 14b.

As is best seen in Fig. 2, the rotatable cam 16 has a pair of first engaging portions 16a and a pair of second engaging portions 16b. Each of the first engaging portions 16a abuts on the first engaging wall 14a of one of the first and second lock members 12A and 12B. On the other hand, each of the second engaging portions 16b abuts on the second engaging wall 14b of one of the first and second lock members 12A and 12B. The rotatable cam 16 has a projection 16c projecting radially outward from between the first and second engaging portions 16a and 16b. In a center of the rotatable cam 16, there is provided a third center shaft opening 16d for inserting therein the center shaft 4.

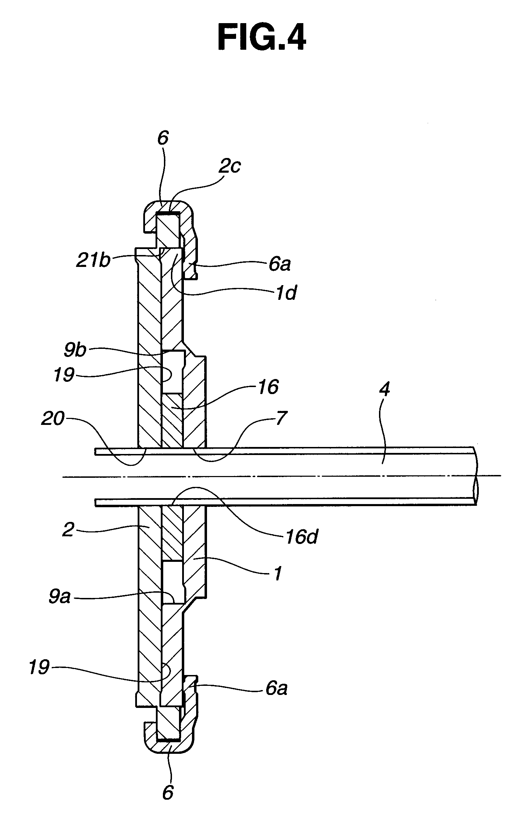

As is seen in Figs. 1 to 4, there is provided a ring member 6 around an external periphery 2c of the rotary arm 2. As is best seen in Fig. 4, the ring member 6 engages with a part of the external periphery 1d of the base member 1. The ring member 6 is secured to the external periphery 2c through a caulking process. The ring member 6 has an inward flange 6a that engages with the part of the external periphery 1d of the base member 1, to thereby prevent the base member 1 from being spaced apart from the rotary arm 2 in a sideward direction in Fig. 4.

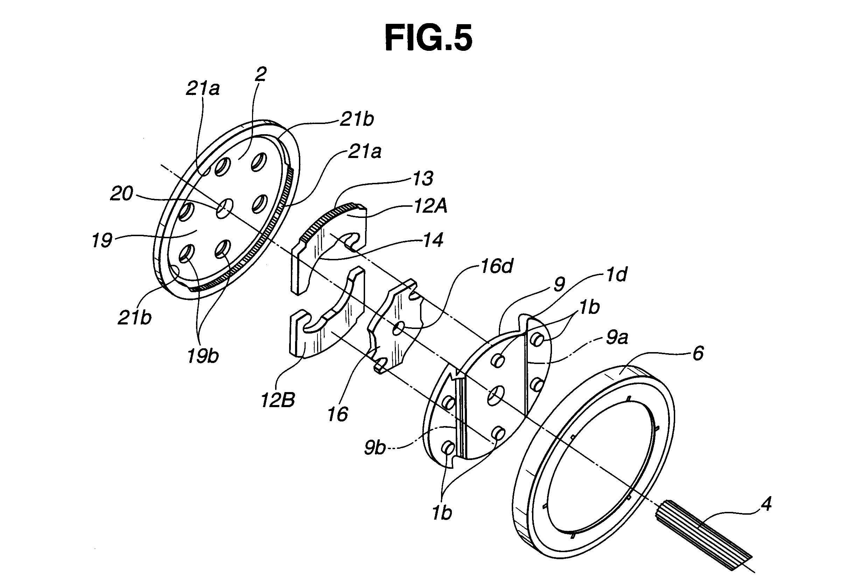

As is seen in Fig. 5, there is provided a reclining apparatus, according to a second preferred embodiment of the present invention. Members having the same constructions and functions as those of the first preferred embodiment are denoted by the same numerals or symbols. The same constructions and functions are not repeatedly described in the second preferred embodiment.

The base member 1 has six bosses 1b for securing the base member 1 to the seat member. Each of the bosses 1b has replaced one of the fastener holes 1a for inserting therein the fasteners B1 in Fig. 1. Moreover, the rotary arm 2 has six bosses 19b for securing the rotary arm 2 to the seat back. Each of the bosses 19b has replaced one of the fastener holes 19b for inserting therein the fasteners B2 in Fig. 1.

Each of the six bosses 1b projects outward in Fig. 5, and is secured to a frame and the like of the seat member through a caulking process or a welding process. On the other hand, each of the six bosses 19b projects outward in Fig. 5, and is secured to a frame and the like of the seat back through the caulking process or the welding process.

Although the first and second preferred embodiments have been described, each with a certain degree of particularity, it is understood that the present disclosure of each of the first and second preferred embodiments can be changed. Specifically, the pair of the lock members 12A and 12B that are two in number can be changed to three or more having regular angular internals. The base member 1, the rotary arm 2, the lock members 12A and 12B, and the rotatable cam 16 can have arbitrary shapes other than those shown in the first and second preferred embodiments.

## Claims

1. A seat reclining apparatus comprising:
a base member adapted to be secured to a seat member, substantially rounded, formed with a pair of first and second guide walls, and having an external periphery;
a rotary arm rotatably supported on the base member, adapted to be secured to a seat back, having a substantially cylindrical recess formed with an internal toothed portion and an internal cylindrical wall surface, the cylindrical recess fitting over a part of the external periphery of the base member, and the rotary arm further having an external periphery;
an lock member put between the base member and the rotary arm, having an external toothed portion, and guided by the pair of the first and second guide walls of the base member;
a rotatable cam put between the base member and the rotary arm, and moving the lock member between a lock position in which the external toothed portion of the lock member meshes with the internal toothed portion of the rotary arm and an unlock position in which the lock member is spaced apart from the internal toothed portion of the rotary arm; and
a ring member disposed around the external periphery of the rotary arm in such a manner as to engage with at least the part of the external periphery of the base member.

2. The seat reclining apparatus as claimed in Claim 1, wherein the rotary arm having the substantially cylindrical recess is substantially circular in shape.

3. The seat reclining apparatus as claimed in Claim 2, wherein the lock member comprises a pair of first and second lock members, each of which is allowed to move freely relative to the pair of the first and second guide walls in a first direction and a second direction opposite to the first direction.

4. The seat reclining apparatus as claimed in Claim 3, wherein the rotatable cam is so profiled as to rotate in a first rotatable direction corresponding to the first direction of each of the first and second lock members such that each of the first and second lock members moves inward toward a center of the base member, and wherein the rotatable cam is so profiled as to rotate in a second rotatable direction corresponding to the second direction of each of the first and second lock members such that each of the first and second lock members moves outward away from the center of the base member.

5. The seat reclining apparatus as claimed in Claim 1, wherein the internal cylindrical wall surface of the cylindrical recess of the rotary arm is so configured as to rotate relative to the external periphery of the base member.

6. The seat reclining apparatus as claimed in Claim 1, wherein the ring member is secured to the external periphery of the rotary arm, and is formed with an inward flange for engaging with the part of the external periphery of the base member.

7. The seat reclining apparatus as claimed in Claim 6, wherein the base member is free from engaging with the inward flange of the ring member in a first cross section parallel to the pair of the first and second guide walls, and wherein the base member engages with the inward flange of the ring member and is shorter than the rotary arm by a length equivalent to two of the external peripheries of the rotary arm in a second cross section perpendicular to the first cross section.

8. The seat reclining apparatus as claimed in Claim 7, wherein the base member has a first center shaft opening, the rotary arm has a second center shaft opening, and the rotatable cam has a third center shaft opening, the first, the second and the third center shaft openings being aligned with each other such that a center shaft can be inserted through the first, the second and the third center shaft openings.

9. The seat reclining apparatus as claimed in Claim 8, wherein the base member further has a plurality of fastener holes around the first center shaft opening, each of the fastener holes inserting therein a fastener so as to secure the base member to the seat member, and wherein the rotary arm further has a plurality of fastener holes around the second center shaft opening, each of the fastener holes inserting therein a fastener so as to secure the rotary arm to the seat back.

10. The seat reclining apparatus as claimed in Claim 8, wherein the base member further has a plurality of bosses around the first center shaft opening, each of the bosses securing the base member to the seat member, and wherein the rotary arm further has a plurality of bosses around the second center shaft opening, each of the bosses securing the rotary arm to the seat back.

11. A seat reclining apparatus comprising:
a base member comprising a fixing portion for fixing the base member to a seat member, and a pair of first and second guide walls;
a rotary arm rotatably supported on the base member, for reclining a seat back, the rotary arm comprising a fixing portion for fixing the rotary arm to the seat back, and a circumferential wall which defines a substantially cylindrical recess, and which comprises an internal toothed portion and an internal cylindrical wall surface fitting over the base member;
a lock member disposed between the base member and the rotary arm, guided between the first and second guide walls of the base member, and formed with an external toothed portion;
a rotatable cam for moving the lock member between a lock position to engage the external toothed portion of the lock member with the internal toothed portion of the rotary arm and an unlock position to disengage the lock member from the internal toothed portion of the rotary arm; and
a ring member surrounding the rotary arm and the base member.

12. The seat reclining apparatus as claimed in Claim 11, wherein the base member comprises an external cylindrical surface fit in the internal cylindrical wall surface of the rotary arm, and the external cylindrical surface extends in an imaginary cylindrical surface of an imaginary right circular cylinder within which the base member is entirely bounded.

13. The seat reclining apparatus as claimed in Claim 12, wherein the base member comprises first and second side portions each having the external cylindrical surface, and a center portion extending along an imaginary radial center line from a first end surface to a second end surface, between the first and second side portions, the first guide wall extends along the imaginary radial center line between the first side portion and the center portion, and the second guide wall extends along the imaginary radial center line between the second side portion and the center portion, and each of the first and second end surfaces of the center portion is depressed inward from the imaginary right circular cylinder defined by the external cylindrical surfaces of the first and second side portions.

14. The seat reclining apparatus as claimed in Claim 13, wherein the ring member is fixed to the rotary arm and formed with an inward flange, and each of the first and second side portions of the base member is confined axially between the inward flange of the ring member and the rotary arm.

15. The seat reclining apparatus as claimed in Claim 14, wherein the inward flange of the ring member extends inwards into the imaginary right circular cylinder defined by the external cylindrical surfaces of the first and second side portions, and confronts the first and second end surfaces of the center portion.

16. The seat reclining apparatus as claimed in Claim 14, wherein the first and second side portions of the base member define a first imaginary side surface facing the rotary arm, and the center portion is depressed from the first imaginary side surface in a direction away from the rotary arm.

17. The seat reclining apparatus as claimed in Claim 13, wherein the seat reclining apparatus further comprises a center shaft for rotating the rotatable cam, the lock member comprises first and second toothed members each formed with the external toothed portion and guided between the first and second guide walls of the base member, the rotatable cam is disposed between the first and second toothed members and profiled to move the first and second toothed members to move in two opposite radial directions along the radial center line of the base member, the internal toothed portion of the rotary arm comprises first and second toothed portions for engaging, respectively, with the first and second toothed members, and the internal cylindrical wall surface of the rotary arm comprises first and second cylinder wall surface portions fitting, respectively, over the external cylindrical surfaces of the first and second side portions of the base member.

18. The seat reclining apparatus as claimed in Claim 11, wherein the fixing portion of the base member comprises a plurality of fastener holes each receiving a fastener for fastening the base member to the seat member, and the fixing portion of the rotary arm comprises a plurality of fastener holes each receiving a fastener for fastening the rotary arm to the seat back.

19. The seat reclining apparatus as claimed in Claim 18, wherein each fastener hole of the base member has an enlarged hole end opening toward the rotary arm, and each fastener hole of the rotary arm has an enlarged hole end opening toward the base member.

20. The seat reclining apparatus as claimed in Claim 11, wherein the fixing portion of the base member comprises a plurality of bosses projecting in an axial direction away from the rotary arm, and the fixing portion of the rotary arm comprises a plurality of bosses projecting in an axial direction away from the base member.
